# EUROPEAN PATENT APPLICATION

(11) **EP 4 851 597 A1**
(43) Date of publication of application: **09.12.2026**
(21) Application number: 25919853.9
(22) Date of filing: 26.12.2025
(51) Int. Cl.: G01M 7/02

(54) **VIBRATION TEST METHOD AND APPARATUS FOR BRAKE PEDAL, AND ELECTRONIC DEVICE AND STORAGE MEDIUM**

(30) Priority: 17.01.2025 CN 202510079066
(71) Applicant: Chery Automobile Co., Ltd., Wuhu, Anhui 241006 (CN)
(72) Inventor: JIANG, Juan, Wuhu, Anhui 241006 (CN); GAO, Yu, Wuhu, Anhui 241006 (CN)
(74) Representative: Adamson Jones
(86) International application number: PCT/CN2025/146048
(87) International publication number: WO 2026/153086

(57) **Abstract**

The present application relates to a vibration test method and apparatus for a brake pedal, and an electronic device and a storage medium. The method comprises: determining an excitation source and at least one stroke opening of a brake pedal to be tested; determining at least one excitation position on the basis of the excitation source, testing a target vehicle, acquiring a vibration signal of each excitation position, and determining an excitation signal of each excitation position on the basis of the vibration signal of each excitation position; and at each stroke opening, exciting a corresponding excitation position on the basis of the excitation signal, collecting a response signal of the brake pedal to be tested, and generating a vibration test result on the basis of the response signal.

## Description

The present disclosure claims priority to Chinese patent application No. 202510079066.2, filed January 17, 2025, and entitled "VIBRATION TEST METHOD AND APPARATUS FOR BRAKE PEDAL, AND ELECTRONIC DEVICE AND STORAGE MEDIUM", the entire contents of which are incorporated herein by reference.

### TECHNICAL FIELD

The present disclosure relates to the technical field of vehicles, and particularly to a vibration testing method and device for a brake pedal, an electronic device, and a storage medium.

### BACKGROUND

Braking is one of the most frequent actions during vehicle operation. When braking, one's foot needs to be placed on the brake pedal, during which one's foot may noticeably feel vibrations, resulting in the phenomenon of brake pedal shake, which not only directly affects the driving experience but also generates noise, and this is the primary source of noise, vibration, and harshness (NVH) during vehicle braking.

As the executive component of braking, the brake pedal is in directly contact with the driver's foot, and the vibration signals it transmits directly affect the comfort of the braking process. Therefore, it is crucial to conduct vibration testing on the brake pedal.

The relevant technology constructs a vehicle braking quality evaluation model through a simulation model, and conducts vibration testing on the brake pedal using this model. However, it is difficult to simulate the vibration of the brake pedal during actual operation using this model, making it challenging to evaluate the vibration characteristics of the brake pedal under real-world conditions.

### SUMMARY

The present disclosure provides a vibration testing method, device, electronic device, and storage medium for brake pedals, aimed at solving the problem that related technologies struggle to simulate the vibration conditions of brake pedals during actual operation. This approach can accurately describe the vibration characteristics of automobile brake pedals under different working conditions, providing a scientific basis for the optimization of brake pedals.

The embodiments of the present disclosure provide a vibration testing method for a brake pedal, which includes the following steps:
determining an excitation source and at least one stroke opening of a brake pedal to be tested;
determining at least one excitation position based on the excitation source, testing a target vehicle, acquiring a vibration signal of each excitation position, and determining an excitation signal of each excitation position based on the vibration signal of each excitation position; and
exciting a corresponding excitation position according to the excitation signal, capturing a response signal of the brake pedal to be tested, and generating a vibration test result based on the response signal at each stroke opening.

Optionally, in some embodiments, before exciting the corresponding excitation position according to the excitation signal, the method further includes:
determining the excitation signal based on a swept-frequency signal of a preset unit force input.

Optionally, in some embodiments, the excitation source includes at least one of a powertrain operational excitation, a road surface excitation, and a braking force excitation.

Optionally, in some embodiments, wherein determining at least one excitation position based on the excitation source includes:
determining the excitation position to be the powertrain operational excitation in the case where the excitation source is the powertrain operational excitation; and
determining the excitation position to be a wheel center and a shock absorber assembly, in the case where the excitation source is the road surface excitation and/or the braking force excitation.

Another embodiment of the present disclosure provides a vibration testing device for a brake pedal, including:
a determination module, configured to determine an excitation source and at least one stroke opening of a brake pedal to be tested;
a testing module, configured to: determine at least one excitation position based on the excitation source, test a target vehicle, acquire a vibration signal of each excitation position, and determine an excitation signal of each excitation position based on the vibration signal of each excitation position; and;
a generation module, configured to excite a corresponding excitation position according to the excitation signal, capture a response signal of the brake pedal to be tested, and generate a vibration test result based on the response signal at each stroke opening.

Optionally, in some embodiments, the testing module includes:
a determination unit which is configured to determine the excitation signal based on a swept-frequency signal of a preset unit force input.

Optionally, in some embodiments, the excitation source includes at least one of a powertrain operational excitation, a road surface excitation, and a braking force excitation.

Optionally, in some embodiments, the testing module is configured to:
determine the excitation position to be the powertrain operational excitation in the case where the excitation source is the powertrain operational excitation; and
determine the excitation position to be a wheel center and a shock absorber assembly, in the case where the excitation source is the road surface excitation and/or the braking force excitation.

Another embodiment of the present disclosure provides an electronic device, including a memory, a processor, and a computer program stored on the memory and executable on the processor. The processor executes the program to implement the vibration testing method of a brake pedal as described in the aforementioned embodiments.

Another embodiment of the present disclosure provides a computer-readable storage medium on which a computer program is stored, the program being executed by a processor to implement the vibration testing method of a brake pedal as described in the aforementioned embodiments.

In embodiments of the present disclosure, by determining the excitation source and at least one stroke opening of the brake pedal to be tested, at least one excitation position is determined based on the excitation source, and the target vehicle is tested to capture the vibration signal of each excitation position. The excitation signal of each excitation position is determined based on the vibration signal of each excitation position. At each stroke opening, the corresponding excitation position is excited based on the excitation signal, and the response signal of the brake pedal to be tested is captured. The vibration test result is generated based on the response signal. Since the excitation signal of each excitation position is determined based on the vibration signal of each excitation position, which is obtained by testing the target vehicle, the excitation signal of each excitation position can simulate the excitation conditions of the target vehicle during actual operation. Therefore, the response signal collected based on the excitation signal can simulate the vibration conditions of the brake pedal during actual operation. Moreover, since at least one stroke opening is set, different stroke openings can simulate different working conditions. Therefore, embodiments of the present disclosure can accurately describe the vibration characteristics of the automobile brake pedal under different working conditions, providing a scientific basis for optimizing the brake pedal.

Additional aspects and advantages of the present disclosure will be set forth in part in the description which follows, and in part will be obvious from the description, or may be learned by practice of the present disclosure.

### BRIEF DESCRIPTION OF DRAWINGS

The above and/or additional aspects and advantages of the present disclosure will become apparent and readily understood from the following description of embodiments taken in conjunction with the accompanying drawings, wherein:
FIG. 1 is a flowchart of a vibration testing method for a brake pedal provided according to embodiments of the present disclosure;
FIG. 2 is a schematic diagram of the principle of the vibration testing method for a brake pedal provided according to an embodiment of the present disclosure;

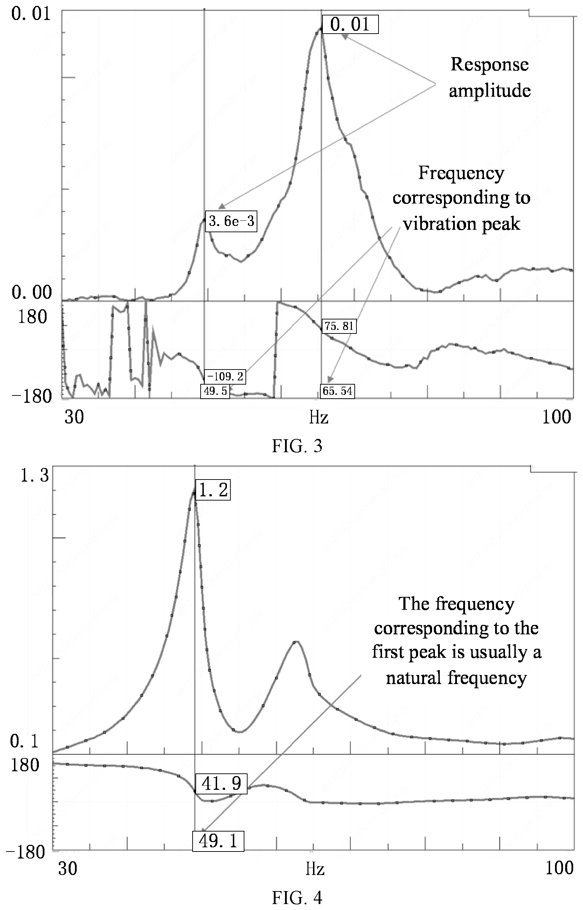

FIG. 3 is a schematic diagram of test results under excitation signals determined based on the actual vehicle operating conditions according to an embodiment of the present disclosure;
FIG. 4 is a schematic diagram of test results under the excitation signal determined by a swept-frequency signal with preset unit force, according to an embodiment of the present disclosure;
FIG. 5 is a block diagram of a vibration testing device for a brake pedal provided according to embodiments of the present disclosure;
FIG. 6 is a schematic structural diagram of an electronic device provided according to embodiments of the present disclosure.

### DETAILED DESCRIPTION

The embodiments of the present disclosure are described in detail below, and examples of the embodiments are shown in the accompanying drawings, wherein the same or similar reference numerals throughout indicate the same or similar elements or elements having the same or similar functions. The embodiments described below with reference to the drawings are exemplary and are intended to explain the present disclosure, and should not be construed as limiting the present disclosure.

Below, a vibration testing method, device, electronic device, and storage medium for a brake pedal in embodiments of the present disclosure are described with reference to the accompanying drawings. Addressing the issue mentioned in the background technology that it is difficult to simulate the vibration of a brake pedal during actual operation, the present disclosure provides a vibration testing method for a brake pedal. In this method, an excitation source and at least one stroke opening of the brake pedal to be tested are determined; at least one excitation position is determined based on the excitation source, and a target vehicle is tested to obtain the vibration signal of each excitation position. The excitation signal of each excitation position is determined based on the vibration signal of each excitation position; at each stroke opening, the corresponding excitation position is excited based on the excitation signal, and the response signal of the brake pedal to be tested is captured. The vibration test result is generated based on the response signal. Since the excitation signal of each excitation position is determined based on the vibration signal of each excitation position, which is obtained by testing the target vehicle, the excitation signal of each excitation position can simulate the excitation condition of the target vehicle during actual operation. Therefore, the response signal captured based on the excitation signal can simulate the vibration of the brake pedal during actual operation. Furthermore, since at least one stroke opening is set, different stroke openings can simulate different operating conditions; thus, embodiments of the present disclosure can accurately describe the vibration characteristics of an automobile brake pedal under different operating conditions, providing a scientific basis for optimizing the brake pedal.

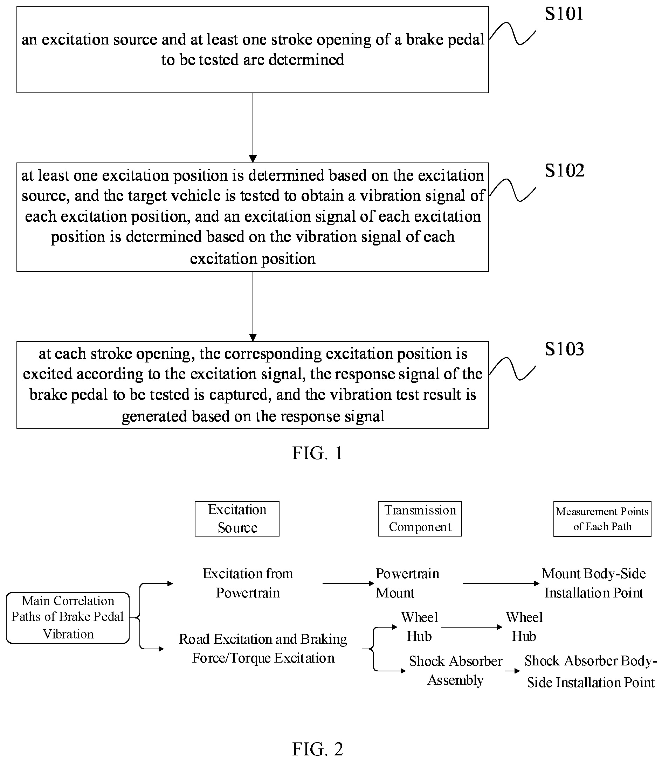

Specifically, FIG. 1 is a schematic flow diagram of a vibration testing method for a brake pedal provided in embodiments of the present disclosure. The executing body of this method is an electronic device. As shown in FIG. 1, the vibration testing method for the brake pedal includes the following steps, that is, S101, S102 and S103.

In S101, an excitation source and at least one stroke opening of a brake pedal to be tested are determined.

The excitation source includes at least one of the following: powertrain operational excitation, road surface excitation, and braking force excitation. Powertrain operational excitation refers to the periodic or non-periodic force or torque generated by the powertrain system during operation. Road surface excitation refers to the force or torque generated by the road surface. Braking force excitation refers to the force or torque applied during braking to induce or drive a deceleration effect, and it can also be referred to as braking torque excitation.

The stroke opening of the brake pedal to be tested refers to the ratio of the stroke of the brake pedal being depressed to the stroke of the brake pedal; the brake pedal stroke refers to the vertical distance traveled by the brake pedal from its fully released state to its fully depressed state.

It should be noted that, according to the mechanism of vibration issues arising from the brake pedal under test, the excitation sources are primarily categorized into powertrain excitation, road surface excitation, and braking force excitation. The stroke opening of the brake pedal under test can be preset by relevant personnel. For instance, based on the entire vehicle testing and considering the typical operating conditions under which brake pedal vibration issues occur, the stroke opening of the brake pedal under test can be set to 1/2 and 1/4, or the stroke opening can be customized according to testing requirements.

In S102, at least one excitation position is determined based on the excitation source, and the target vehicle is tested to obtain a vibration signal of each excitation position, and an excitation signal of each excitation position is determined based on the vibration signal of each excitation position.

Optionally, in some embodiments, determining at least one excitation position based on the excitation source includes: when the excitation source is a powertrain operational excitation, determining the excitation position as the powertrain operational excitation; when the excitation source is a road surface excitation and/or a braking force excitation, determining the excitation position as the wheel hub and shock absorber assembly.

It can be understood that, as shown in FIG. 2, the powertrain excitation is mainly inputted to the vehicle body through the powertrain mount point, causing the vehicle body to vibrate. Since the brake pedal is rigidly connected to the firewall of the vehicle body, the vibration signal will be transmitted to the brake pedal. Therefore, the path of the vibration signal is defined as the installation point of the powertrain mount on the vehicle body. In other words, the path of the vibration signal is defined as powertrain mount point - vehicle body - brake pedal. The excitation signal of the input point (excitation source) is defined as the actual vibration signal at the real vehicle mount point. In other words, the excitation signal of the input point (excitation source) is defined as the vibration signal of the powertrain mount point of the target vehicle, and the excitation signal of the input point defined in the embodiments of the present disclosure is consistent with the actual situation. Road surface excitation and braking force excitation are mainly transmitted to the vehicle body through the wheel hub via the suspension, and then to the brake pedal. Therefore, in the case where the excitation source is road surface excitation and/or braking force excitation, the path of the vibration signal is defined as two stages: the wheel hub and the attachment point between the suspension and the vehicle body (shock absorber installation point), in other words, the path of the vibration signal is defined as wheel hub - attachment point between the suspension and the vehicle body - vehicle body - brake pedal. The excitation signal of the excitation source is the measured vibration signal of the corresponding excitation position.

That is to say, in the case where the excitation source is the powertrain excitation, the transmission component is the powertrain mount. In the embodiments of the present disclosure, a three-axis acceleration sensor is arranged on the powertrain mount of the target vehicle, and the vibration signal of the powertrain mount is acquired under real vehicle operating conditions. Based on the vibration signal of the powertrain mount, the excitation signal of the powertrain mount suspension is determined.

In the case where the excitation source is the road surface excitation and braking force excitation, the transmission path of the vibration signal mainly passes through the wheel hub, via the suspension, to the vehicle body, and then to the brake pedal. Therefore, the transmission path of the vibration signal is defined as two stages: one is the wheel hub, and the other is the attachment point between the suspension and the vehicle body (i.e., the shock absorber mounting point). Three-axis acceleration sensors are arranged at the wheel hub and the shock absorber mounting point on the vehicle body of the target vehicle. It should be noted that the vibration measurement point of the wheel hub is recommended to be located at the middle position of the steering knuckle, which is conducive to arranging the vibration exciter. Under real vehicle operating conditions, the vibration signals of the wheel hub and the shock absorber are acquired, and the corresponding excitation signals are determined based on the vibration signals of the wheel hub and the shock absorber.

In the actual implementation process, embodiments of the present disclosure obtain vibration signals of the excitation source by testing the target vehicle and determine the excitation signal based on the vibration signals. Specifically, three-axis acceleration sensors are installed at the mounting point on the body side of the powertrain suspension, at the wheel hub (it is recommended to place the vibration measurement point of the wheel hub at the middle of the steering knuckle to facilitate the arrangement of the vibration exciter), and at the mounting point of the shock absorber on the body, so as to acquire vibration signals under actual operating conditions.

The real vehicle operating condition is defined as follows: after the vehicle reaches a speed of 120KPH, the brake pedal is depressed, and the speed is reduced to 50KPH within 8-10 seconds. This process is repeated until three sets of vibration signals with good consistency are obtained. As shown in Table 1, Table 1 is the collection table of vibration signals under the real vehicle operating condition. The real vehicle operating condition is defined as follows: after the vehicle reaches a speed of 120KPH, the brake pedal is pressed, and the speed is reduced to 50KPH within 8-10 seconds. This process is repeated until three sets of vibration signals with good consistency are obtained. For example, through multiple tests, the vibration acceleration curves based on rotational speed in the X, Y, and Z directions at the powertrain suspension mounting points are recorded, and the amplitude of the vibration peak of the vibration signal and the corresponding rotational speed or rotational speed range are identified, thereby determining the frequency or frequency range of the vibration signal.

**Table 1**

| Operating Condition | Measuring Point | Direction | Data Type | Data Volume | Data Analysis |
|---|---|---|---|---|---|
| After reaching a speed of 120KPH, depress the brake pedal | 1. Powertrain mount installation point. | X, Y, Z | Vibration acceleration curve based on engine speed (X- | 3 | 1. Record the curve; |
| | | | | | 2. Identify the amplitude of the vibration |
| | 2. Wheel hub. | | | 3 | |
| and reduce the speed to 50KPH within 8-10 seconds. | 3. Attachment points on the body side of the left and right shock absorbers. | | axis represents engine speed, Y-axis represents vibration acceleration amplitude). | 3 | peak in the vibration signal and the corresponding speed or speed range; |
| | 4. Brake pedal body. | | | 3 | |
| | | | | | 3. Based on the obtained rotational speed and speed range, determine the frequency or frequency range of the vibration signal (primarily considering 2nd-order excitation) according to the formula: frequency = rotational speed ÷ 60 × order. |

In S103, at each stroke opening, the corresponding excitation position is excited according to the excitation signal, the response signal of the brake pedal to be tested is captured, and the vibration test result is generated based on the response signal.

Optionally, based on each stroke opening, the target vehicle is positioned. This process can be as follows: in embodiments of the present disclosure, by applying weight on the brake pedal (footrest position) of the target vehicle, the stroke of the brake pedal reaches the stroke opening. The applied weight can be achieved by adding extra mass, and the added mass needs to be rigidly connected to the pedal.

Optionally, static excitation can be used instead of dynamic excitation, and the static excitation can be an exciter. Correspondingly, the step of exciting the corresponding excitation position according to the excitation signal and capturing the response signal of the brake pedal to be tested can be as follows: the vibration exciter is configured to excite the excitation location, and the excitation signal is configured as the frequency-domain vibration amplitude curves at respective points under actual operating conditions for excitation data acquisition; in other words, the exciter excites the excitation signal at the excitation position, and the excitation signal causes vehicle vibration, which in turn causes the brake pedal to be tested to vibrate. The response signal of the brake pedal to be tested is captured, and this response signal is configured to characterize the vibration condition of the brake pedal to be tested. The response signal of the brake pedal to be tested can be captured through a vibration acceleration sensor.

As shown in Table 2, during the actual execution process, the data acquisition parameters of the vibration acceleration sensor are set as follows: the frequency of the vibration acceleration sensor is 20-100Hz, the signal resolution of the vibration acceleration sensor is 1Hz, and both the input and output apply rectangular windows, that is, the input and output signals of the vibration acceleration sensor are multiplied by matrix window functions, thereby reducing the spectral leakage of the response signal and improving the signal resolution. Furthermore, all sensors (exciter and vibration acceleration) are calibrated according to conventional requirements.

**Table 2**

| Hardware | Signal Type | Excitation position | Data collection | Sensitivity | Quantity |
|---|---|---|---|---|---|
| Excitation by vibration exciter; capture by | The excitation signal determined | 1. Powertrain mount installation point; | Frequency response function (response/input | 1. Obtain the sensitivity under actual load | 12 |
| | | 2. Wheel hub; | | | |
| vibration acceleration sensor. | by the actual vehicle operating conditions. | 3. Attachment points on the body side of the left and right shock absorbers; | force), curve form: the horizontal axis represents frequency; the vertical axis represents amplitude. | excitation, and identify the corresponding frequency when the response amplitude and vibration peak occur, as shown in FIG. 3. | |
| | | 4. Pedal body. | | | |
| | The excitation signal is determined by the swept-frequency signal of a preset unit force input. | | | 2. Obtain the sensitivity under unit force excitation, and record the response amplitude and natural frequency to form target values based on extensive data statistics, as shown in FIG. 4. | 12 |

The response point in the embodiments of the present disclosure is the middle of the driver's foot on the brake pedal body to be tested. The sensitivity adopts the frequency response function as the type of captured data. The excitation is defined as the force of the vibration exciter at each input point, and the response point is defined as the acceleration signal on the pedal. Coherence is introduced to effectively avoid external interference. For the sensitivity signal obtained by using actual vibration as input, the main identification is the response amplitude and the frequency corresponding to the occurrence of vibration peaks, which are used to solve practical problems. Correspondingly, the vibration test results can assign values to the response and the frequency corresponding to the occurrence of vibration peaks.

Therefore, during the testing process, the vibration exciter is configured to excite each measuring point according to the vibration amplitude curve measured under actual working conditions. This means that the magnitude and frequency variation pattern of the force applied by the vibration exciter are completely consistent with the excitation received by the point during actual vehicle operation. The data collected in this way can truly simulate the vibration excitation experienced by the brake pedal during actual use, thereby accurately evaluating the vibration response and sensitivity of the brake pedal under actual working conditions. This is of great significance for analyzing and solving brake pedal vibration issues that occur during actual driving, helping engineers understand the vibration characteristics of the brake pedal in real-world usage scenarios and providing a basis for optimal design.

Optionally, in some embodiments, before exciting the corresponding excitation position according to the excitation signal, the method further includes: determining the excitation signal based on a swept-frequency signal of a preset unit force input.

Optionally, as shown in Table 2, in addition to determining the excitation signal at the excitation position through actual vehicle operating conditions, embodiments of the present disclosure can also determine the excitation signal based on a swept-frequency signal of a preset unit force input. The swept-frequency signal of a preset unit force input is a standardized test signal, which is not generated based on the actual operating conditions of the vehicle, but rather is an excitation signal set by test personnel according to test requirements.

During the actual execution process, the vibration exciter stimulates the excitation position according to the swept-frequency signal of a preset unit force input, starting from the lowest frequency and gradually increasing the frequency until reaching the highest frequency. At each frequency point, the vibration exciter applies a constant unit force, observes and records the response signal of the brake pedal, and focuses on the response amplitude for the sensitivity signal obtained as input from the swept-frequency signal of unit force, which is used to form a target value based on a large amount of data statistics.

It should be noted that for the frequency response curves obtained through the excitation of a swept-frequency signal of a preset unit force input, the natural frequencies at each measurement point are identified. It is recommended that there be a 3Hz spacing between the natural frequencies of measurement points on different paths, and a 5Hz spacing between the natural frequencies of the path and the pedal assembly. This ensures frequency avoidance between paths and between paths and responses, thereby preventing resonance amplification caused by modal coupling.

Thus, the data captured under the excitation of a swept-frequency signal of a preset unit force input is primarily used to identify the natural frequency and frequency response characteristics of the brake pedal. By analyzing the response amplitude of the pedal at different frequencies, the resonant frequency and non-resonant frequency regions of the pedal can be determined. This information is crucial for establishing a vibration model of the brake pedal, predicting its vibration behavior under different excitation conditions, and formulating vibration control strategies. Furthermore, by statistically analyzing a large amount of data captured under the excitation of a swept-frequency signal of unit force, target values can be established to evaluate whether the vibration sensitivity of the brake pedal meets the design requirements.

In summary, the embodiments of the present disclosure determine the excitation signal through real vehicle operating conditions to simulate and analyze the vibration of the brake pedal under actual driving conditions, directly testing and analyzing the actual problem. The swept-frequency signal of a preset unit force input is used for basic research and performance evaluation, and the standardized excitation signal is used to fully understand the vibration characteristics of the brake pedal, providing theoretical support for design and optimization.

According to the vibration testing method for brake pedals proposed in embodiments of the present disclosure, the excitation source and at least one stroke opening of the brake pedal to be tested are determined, and at least one excitation position is determined based on the excitation source. The target vehicle is tested, the vibration signal of each excitation position is acquired, and the excitation signal of each excitation position is determined based on the vibration signal of each excitation position. At each stroke opening, the corresponding excitation position is excited based on the excitation signal, the response signal of the brake pedal to be tested is captured, and the vibration test result is generated based on the response signal. Since the excitation signal of each excitation position is determined based on the vibration signal of each excitation position, which is obtained by testing the target vehicle, the excitation signal of each excitation position can simulate the excitation conditions of the target vehicle during actual operation. Therefore, the response signal collected based on the excitation signal can simulate the vibration conditions of the brake pedal during actual operation. Furthermore, since at least one stroke opening is set, different stroke openings can simulate different working conditions; thus, embodiments of the present disclosure can describe the vibration characteristics of automobile brake pedals under different working conditions, providing a scientific basis for the optimization of brake pedals.

Next, a vibration testing device for brake pedals, proposed according to embodiments of the present disclosure, will be described with reference to the accompanying drawings.

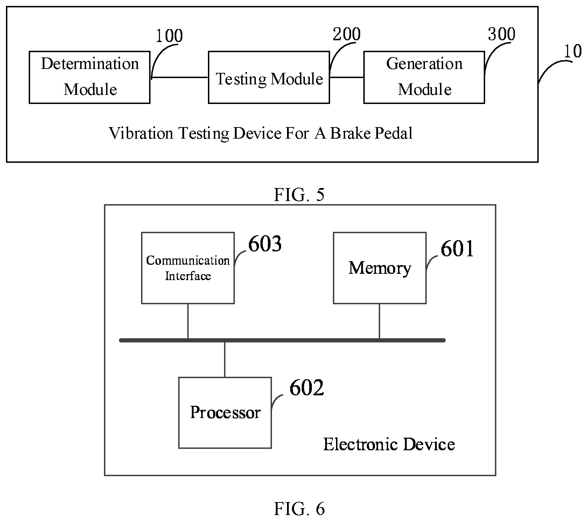

FIG. 5 is a block diagram of a vibration testing device for a brake pedal according to embodiments of the present disclosure.

As shown in FIG. 5, the vibration testing device 10 for the brake pedal includes a determination module 100, a testing module 200, and a generation module 300.

The determination module 100 is configured to determine the excitation source and at least one stroke opening of the brake pedal to be tested.

The testing module 200 is configured to: determine at least one excitation position based on the excitation source, test the target vehicle, acquire the vibration signal of each excitation position, and determine the excitation signal of each excitation position based on the vibration signal of each excitation position.

The generation module 300 is configured to excite the corresponding excitation position according to the excitation signal at each stroke opening, capture the response signal of the brake pedal to be tested, and generate the vibration test result based on the response signal.

Optionally, in some embodiments, the testing module 200 includes: a determining unit.

The determining unit is configured to determine the excitation signal based on the swept-frequency signal of a preset unit force input.

Optionally, in some embodiments, the excitation source includes at least one of a powertrain operational excitation, a road surface excitation, and a braking force excitation.

Optionally, in some embodiments, the testing module 200 is configured to:
determine the excitation position to be the powertrain operational excitation, when the excitation source is the powertrain operational excitation; determine the excitation position to be the wheel hub and shock absorber assembly, when the excitation source is road surface excitation and/or braking force excitation.

It should be noted that the explanation of the embodiment of the vibration testing method for brake pedals mentioned above also applies to the vibration testing device for brake pedals in this embodiment, and will not be repeated here.

According to the vibration testing device for brake pedals proposed in embodiments of the present disclosure, the excitation source and at least one stroke opening of the brake pedal to be tested are determined, and at least one excitation position is determined based on the excitation source. The target vehicle is tested, the vibration signal of each excitation position is acquired, and the excitation signal of each excitation position is determined based on the vibration signal of each excitation position. At each stroke opening, the corresponding excitation position is excited based on the excitation signal, the response signal of the brake pedal to be tested is captured, and the vibration testing result is generated based on the response signal. Since the excitation signal of each excitation position is determined based on the vibration signal of each excitation position, which is obtained by testing the target vehicle, the excitation signal of each excitation position can simulate the excitation conditions of the target vehicle during actual operation. Therefore, the response signal captured based on the excitation signal can simulate the vibration conditions of the brake pedal during actual operation. Furthermore, since at least one stroke opening is set, different stroke openings can simulate different working conditions; thus, embodiments of the present disclosure can describe the vibration characteristics of automobile brake pedals under different working conditions, providing a scientific basis for the optimization of brake pedals.

FIG. 6 is a schematic structural diagram of an electronic device provided in embodiments of the present disclosure. The electronic device may include:
a memory 601, processor 602, and computer programs stored on the memory 601 and executable on the processor 602.

When executing the program, the processor 602 implements the vibration testing method for the brake pedal provided in the aforementioned embodiment.

Furthermore, the electronic device also includes:
a communication interface 603 configured for communication between the memory 601 and the processor 602.

The memory 601 is configured to store computer programs that can run on the processor 602.

The memory 601 may include high-speed RAM (Random Access Memory) storage, and may also include non-volatile storage, such as at least one disk storage.

If the memory 601, processor 602, and communication interface 603 are implemented independently, the communication interface 603, memory 601, and processor 602 can be interconnected via a bus and complete communication among them. The bus can be an ISA (Industry Standard Architecture) bus, PCI (Peripheral Component Interconnect) bus, or EISA (Extended Industry Standard Architecture) bus, among others. The bus can be divided into address bus, data bus, control bus, etc. For ease of representation, only one thick line is used in FIG. 6, but it does not indicate that there is only one bus or only one type of bus.

Optionally, in specific implementations, if the memory 601, processor 602, and communication interface 603 are integrated onto a single chip, they can communicate with each other through an internal interface.

The processor 602 may be a CPU (Central Processing Unit), an ASIC (Application Specific Integrated Circuit), or one or more integrated circuits configured to implement embodiments of the present disclosure.

The embodiments of the present disclosure further provide a computer-readable storage medium on which a computer program is stored, and when the program is executed by a processor, it implements the above-mentioned vibration testing method for brake pedals.

The embodiments of the present disclosure further provide a computer program product, including a computer program for implementing the aforementioned vibration testing method for a brake pedal.

In the description of this specification, references to terms such as "an embodiment", "some embodiments", "an example", "a specific example", or "some examples" indicate that the specific features, structures, materials, or characteristics described in conjunction with the embodiment or example are included in at least one embodiment or example of the present disclosure. In this specification, the illustrative expressions of the aforementioned terms do not necessarily refer to the same embodiment or example. Furthermore, the specific features, structures, materials, or characteristics described can be combined in any one or multiple embodiments or examples in an appropriate manner. Additionally, provided that there is no contradiction, those skilled in the art can combine and integrate different embodiments or examples, as well as the features of different embodiments or examples, described in this specification.

Furthermore, the terms "first" and "second" are used solely for descriptive purposes and should not be construed as indicating or implying relative importance or implicitly specifying the number of technical features indicated. Consequently, features designated as "first" or "second" may explicitly or implicitly include at least one such feature. In the description of the present disclosure, the term "N" implies at least two, such as two, three, etc., unless otherwise specifically and explicitly limited.

Any process or method description depicted in the flowchart or otherwise described herein may be understood to represent a module, segment, or portion of code that includes one or more executable instructions for implementing steps of a customized logic function or process. The scope of preferred embodiments of the present disclosure includes alternative implementations, wherein functions may be performed in a substantially simultaneous manner or in reverse order according to the functions involved, rather than in the order shown or discussed, which should be understood by those skilled in the technical field to which the embodiments of the present disclosure belong.

It should be understood that various parts of the present disclosure can be implemented using hardware, software, firmware, or a combination thereof. In the aforementioned embodiments, the N steps or methods can be implemented using software or firmware stored in a memory and executed by a suitable instruction execution system. For instance, if implemented using hardware, as in another embodiment, any one or a combination of the following techniques well known in the art can be utilized: discrete logic circuits with logic gates for implementing logical functions on data signals, application-specific integrated circuits with appropriate combinational logic gates, programmable gate arrays, field programmable gate arrays, etc.

Those skilled in the technical field can understand that all or part of the steps carried out by the method of the above embodiment can be instructed to relevant hardware through a program. The program can be stored in a computer-readable storage medium, and when executed, the program includes one or a combination of the steps of the method embodiment.

Although the embodiments of the present disclosure have been shown and described above, it is understood that the aforementioned embodiments are exemplary and should not be construed as limitations on the present disclosure. Those skilled in the art may make variations, modifications, substitutions, and alterations to the aforementioned embodiments within the scope of the present disclosure.

## Claims

1. A vibration testing method for a brake pedal, comprising:
determining an excitation source and at least one stroke opening of a brake pedal to be tested;
determining at least one excitation position based on the excitation source, testing a target vehicle, acquiring a vibration signal of each excitation position, and determining an excitation signal of each excitation position based on the vibration signal of each excitation position; and
exciting a corresponding excitation position according to the excitation signal, capturing a response signal of the brake pedal to be tested, and generating a vibration test result based on the response signal at each stroke opening.

2. The method according to claim 1, wherein before exciting the corresponding excitation position according to the excitation signal, the method further comprises:
determining the excitation signal based on a swept-frequency signal of a preset unit force input.

3. The method according to claim 1, wherein the excitation source comprises at least one of a powertrain operational excitation, a road surface excitation, and a braking force excitation.

4. The method according to claim 3, wherein determining at least one excitation position based on the excitation source comprises:
determining the excitation position to be the powertrain operational excitation in the case where the excitation source is the powertrain operational excitation; and
determining the excitation position to be a wheel center and a shock absorber assembly, in the case where the excitation source is the road surface excitation and/or the braking force excitation.

5. A vibration testing device for brake pedals, comprising:
a determination module, configured to determine an excitation source and at least one stroke opening of a brake pedal to be tested;
a testing module, configured to: determine at least one excitation position based on the excitation source, test a target vehicle, acquire a vibration signal of each excitation position, and determine an excitation signal of each excitation position based on the vibration signal of each excitation position; and
a generation module, configured to excite a corresponding excitation position according to the excitation signal, capture a response signal of the brake pedal to be tested, and generate a vibration test result based on the response signal at each stroke opening.

6. The device according to claim 5, wherein the testing module comprises:
a determination unit which is configured to determine the excitation signal based on a swept-frequency signal of a preset unit force input.

7. The device according to claim 5, wherein the excitation source comprises at least one of a powertrain operational excitation, a road surface excitation, and a braking force excitation.

8. The device according to claim 7, wherein the testing module is configured to:
determine the excitation position to be the powertrain operational excitation in the case where the excitation source is the powertrain operational excitation; and
determine the excitation position to be a wheel center and a shock absorber assembly, in the case where the excitation source is the road surface excitation and/or the braking force excitation.

9. An electronic device, comprising: a memory, a processor, and a computer program stored on the memory and executable on the processor, wherein the processor executes the program to implement the vibration testing method for a brake pedal as claimed in any one of claims 1 to 4.

10. A computer-readable storage medium on which a computer program is stored, wherein the program is executed by a processor to implement the vibration testing method for a brake pedal according to any one of claims 1 to 4.

11. A computer program product, comprising a computer program that is executed to implement the vibration testing method of a brake pedal according to any one of claims 1 to 4.
